(19) **Europäisches Patentamt**

**European Patent Office**

**Office européen des brevets**

(11) **EP 0 776 457 B1**

(12) **EUROPÄISCHE PATENTSCHRIFT**

(45) Veröffentlichungstag und Bekanntmachung des Hinweises auf die Patenterteilung:
**19.01.2000 Patentblatt 2000/03**

(51) Int Cl.⁷: $G01B\ 9/04$

(21) Anmeldenummer: **95928427.4**

(22) Anmeldetag: **16.08.1995**

(86) Internationale Anmeldenummer:
**PCT/DE95/01073**

(87) Internationale Veröffentlichungsnummer:
**WO 96/06324 (29.02.1996 Gazette 1996/10)**

(54) **VERFAHREN UND INTERFERENZMIKROSKOP ZUM MIKROSKOPIEREN EINES OBJEKTES ZUR ERZIELUNG EINER AUFLÖSUNG JENSEITS DER BEUGUNGSGRENZE**

METHOD AND INTERFERENCE MICROSCOPE FOR IMAGING AN OBJECT, WITH THE AIM OF ACHIEVING A RESOLUTION BEYOND THE DIFFRACTION LIMIT

PROCEDE ET MICROSCOPE INTERFERENTIEL PERMETTANT D'EXAMINER UN OBJET POUR PARVENIR A UNE RESOLUTION AU-DELA DU SEUIL DE DIFFRACTION

(84) Benannte Vertragsstaaten:
**AT BE CH DE DK ES FR GB GR IE IT LI LU MC NL PT SE**

(30) Priorität: **19.08.1994 DE 4429416**

(43) Veröffentlichungstag der Anmeldung:
**04.06.1997 Patentblatt 1997/23**

(73) Patentinhaber:
• **Velzel, Christiaan, H., F.**
 **5643 JC Eindhoven (NL)**
• **Masselink, Robert**
 **28844 Weyhe-Leeste (DE)**
• **Schreier, Hans Hermann**
 **26131 Oldenburg (DE)**

(72) Erfinder:
• **Velzel, Christiaan, H., F.**
 **5643 JC Eindhoven (NL)**

• **Masselink, Robert**
 **28844 Weyhe-Leeste (DE)**
• **Schreier, Hans Hermann**
 **26131 Oldenburg (DE)**

(74) Vertreter: **Jabbusch, Wolfgang, Dr.Jur. Jabbusch, Wehser & Lauerwald Patentanwälte et al**
 **Koppelstrasse 3**
 **26135 Oldenburg (DE)**

(56) Entgegenhaltungen:
• **OPTICS COMMUNICATIONS, Bd. 74, Nr. 1/2, 1.Dezember 1989 AMSTERDAM NL, Seiten 37-40, XP 000071159 V.P. TYCHINSKY E.A. 'COMPUTERIZED PHASE MICROSCOPE FOR INVESTIGATION OF SUBMICRON STRUCTURES'**

**Beschreibung**

Die Erfindung betrifft ein Verfahren zum Mikroskopieren eines Objektes mit einem extrem hoch auflösenden Interferenzmikroskop, bei welchem das Objekt mittels einer Lichtquelle durch ein Objektiv beleuchtet wird, wobei der Lichtstrahl der Lichtquelle durch einen Strahlteiler in wenigstens zwei kohärente Teilstrahlen geteilt wird, von denen wenigstens einer zur Beleuchtung des Objektes dient, und die Teilstrahlen nach der Beleuchtung des Objektes und gegebenenfalls eines Referenzobjektes interferierend wieder zusammengeführt und einem in Bildbereiche gerasterten Interferenzbilddetektor zur Erzeugung wenigstens eines Interferenzbildes zugeführt werden und aus der Bildinformation eines oder mehrerer Interferenzbilder mittels eines geeigneten Algorithmus ein Phasenbild errechnet wird, zur Erzielung einer Auflösung jenseits der Beugungsgrenze, d.h. einer zu bestimmenden Ortsunsicherheit $\Delta$ x auf dem Objekt kleiner als eine halbe Wellenlänge des benutzten Lichtes.

Weiter betrifft die Erfindung ein Interferenzmikroskop, zum Beispiel des Linnik-Types, mit einer Lichtquelle zur Beleuchtung eines Objektes, mit einem Strahlteiler zur Teilung des von der Lichtquelle ausgesandtes Lichtstrahles in wenigstens zwei kohärente Teilstrahlen, von denen wenigstens einer zur Beleuchtung des Objektes vorgesehen ist, und mit einem in Bildbereiche gerasterten Interferenzbilddetektor, beispielsweise einer qepixelten CCD-Zeile, zur Detektion des Interferenzbildes der interferierenden Teilstrahlen.

Techniken zur Phasenmessungsinterferenzmikroskopie sind beispielsweise bekannt aus dem Aufsatz von Catherine Creath "Phase-Measurement Interferometry Techniques" veröffentlicht in E. Wolf, Progress in Optics XXVI, Amsterdam 1988, Seiten 350-393.

Allgemein kann in einem Interferenzmikroskop das Intensitätsmuster, welches in der Bildebene durch Interferenz der Objektwelle und einer kohärenten Referenzwelle geformt wird, in ein Phasenbild überführt werden, und zwar durch Abtastung bzw. Aufnahme des Bildes durch einen gerasterten Interferenzbilddetektor, beispielsweise durch eine gepixelte CCD-Zeile und durch eine weitere Verarbeitung des erhaltenen Bildes oder einer Anzahl von Bildern durch einen Software-Algorithmus. Verschiedene Algorithmen und deren Vorteile bzw. Verdienste werden in dem oben zitierten Aufsatz referiert.

Für die vorliegende Erfindung spielt insbesondere die in dem vorzitierten Aufsatz in Kapitel 3.4. angesprochene Vier-Schritt-Vorgehensweise, die sogenannte Four-Bucket-Method, eine Rolle, die nachstehend als Hintergrundwissen erläutert werden soll. Dies geschieht im Hinblick darauf, daß, gemäß der einganas genannten Gattung, durch Interferenzmikroskopie eine Auflösung jenseits der Beugungsgrenze, d.h. einer zu bestimmenden Ortsunsicherheit kleiner als der halben Wellenlänge des benutzten Lichtes, eine sogenannte Superresolution, erreicht werden soll.

Der sogenannte Four-Bucket-Algorithmus benutzt vier Intensitätsbilder um ein Phasenbild zu erhalten. Die Intensität in einem (Zweistrahl-)Tnterferenzmuster kann beschrieben werden durch:

$$(1) \qquad I(x,y) = a^2(x,y)\,(1+\mu(x,y)\cos\varphi(x,y))$$

Wobei $a(x,y)$ die reelle Amplitude, $\mu(x,y)$ der Streifenkontrast (Modulationstiefe) und $\varphi(x,y)$ das Phasenbild ist, welches erhalten werden soll. Der Detektor durchmustert diese Intensitätsverteilung. Für Pixel $(i,j)$ eines CCD-Detektors erhält man damit:

$$(2) \qquad I(i,j) = a^2(i,j)\,(1+\mu(i,j)\cos\varphi(i,j)).$$

Als Interferenzmikroskop können dabei verschiedene Typen von Mikroskopen benutzt werden, beispielsweise Mirau, Nomarski usw. Bevorzugt wird allerdings ein Mikroskop vom Linnik-Typ. Derartige Mikroskope werden beispielsweise beschrieben in H. Beyer und H. Riesenberg, "Handbuch der Mikroskopie", Berlin, 1988, Kapitel 6.2.

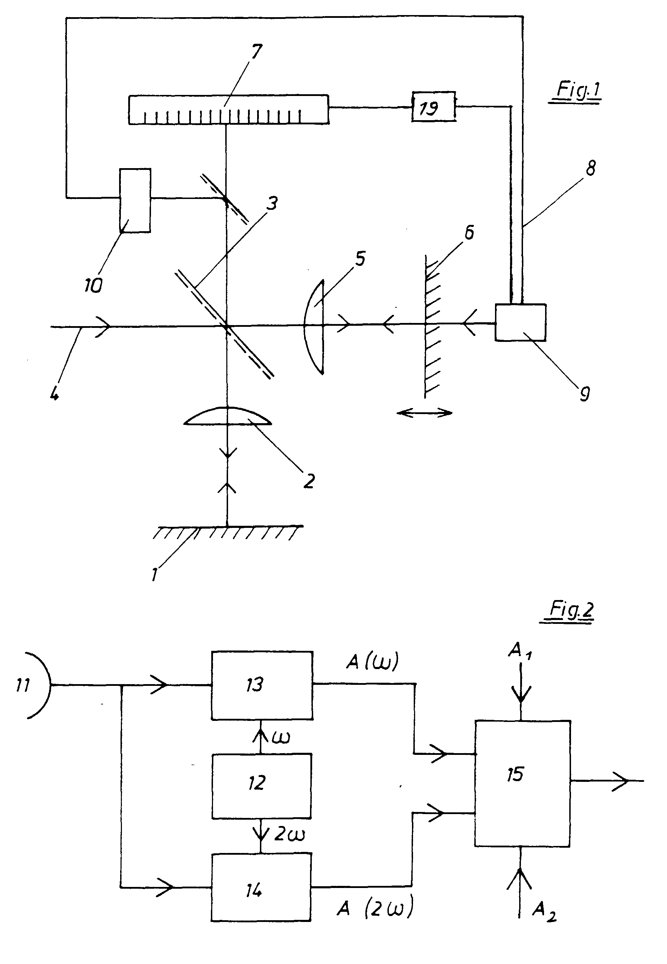

Bei einem Mikroskop des Linnik-Typs (wie es in Fig. 1 gezeigt wird) wird ein Lichtstrahl mittels eines Strahlteilers in einen Objektstrahl und einen Referenzstrahl geteilt, wobei der Objektstrahl, in diesem Falle, vom Objekt reflektiert wird und der Referenzstrahl von einem Referenzspiegel reflektiert wird. Beide Strahlen werden danach interferierend dem Detektor zugeführt. Der Referenzspiegel ist in Strahlrichtuna des Referenzstrahles bewegbar.

Aus der Veröffentlichung "Computerized Phase Microscope for investigation of submicron structures" von V.P. Tychinsky et al., Optics Communications, BD 74, 1/2, 1. Dezember 1989, Amsterdam, Seiten 37 bis 40, ist ein gattungsgemäßes Interferenzmikroskop bekannt. Das beschriebene computergestützte Interferenzmikroskop weist ebenfalls eine Lichtquelle zur Beleuchtung eines Objektes mit einem Strahlteiler zur Teilung des von der Lichtquelle abgesandten Lichtstrahles in wenigsten zwei kohärente Teilstrahlen auf, von denen wenigstens einer zur Beleuchtung des Objektes vorgesehen ist. Außerdem ist ein in Bildbereiche gerasteter Interferenzdetektor vorgesehen, bei dem ein Rückkopplungszweig zwischen einem Detektor, der mit dem Interferenzbilddetektor identisch sein kann, und einer Betätigungseinrichtung für ein von einem der Teilstrahlen beleuchteten Interferenzobjekt angeordnet ist.

Zur Anwendung des vorgenannten Vier-Schritt-Verfahrens bzw. der Four-Bucket-Method wird der Referenzspiegel bezüglich seiner ursprünglichen Position zur Erzielung des Bildes gemäß Gleichung (2) über Distanzen $1/4\,\lambda$, $-1/8\,\lambda$ und $1/8\lambda$ jeweils bewegt, wobei $\lambda$ die Wellenlänge des benutzten Lichtes der Lichtquelle ist. Daraus erhält man die vier Bilder:

$$(3) \qquad I_1 = a^2 (1 + \mu \cos \varphi)$$

$$I_2 = a^2 (1 - \mu \cos \varphi)$$

$$I_3 = a^2 (1 - \mu \sin \varphi)$$

$$I_4 = a^2 (1 + \mu \sin \varphi)$$

In diesen vier Gleichungen wurden aus Bequemlichkeit die Pixelkoordinaten fortgelassen.

Aus den Gleichungen (3) kann ersehen werden, daß für jedes Pixel gilt:

$$(4) \qquad \tan \varphi = \frac{I_4 - I_3}{I_1 - I_2}$$

Natürlich wird $\varphi$ zwischen $-\pi/2$ und $+\pi/2$ erhalten. Für größere Werte wäre ein Entfaltungverfahren notwendig. In kommerziell erhältlicher Software stehen die genannten Algorithmen zur Verfügung. Alle Phasenmessungsalgorithmen, wie sie in dem zitierten Aufsatz von Creath beschrieben werden, leiden allerdings unter dem angesprochenen Problem der Begrenzung für den Weit von $\varphi$, jedenfalls bis zu einem gewissen Grade.

Der geschilderte Four-Bucket-Algorithmus hat einen Vorteil und einen Nachteil im Vergleich zu anderen Algorithmen, wie sie in dem vorgenannten Aufsatz beschrieben werden. Der Vorteil besteht darin, daß dieser Algorithmus relativ unempfindlich für Detektor-Nichtlinearitäten ist. Der Nachteil besteht darin, daß der Algorithmus relativ empfindlich für Fehler in den $\pi/2$-Phasen-Schritten ist, also bezüglich der Positionierung des Referenzspiegels. Dies macht die üblichen digitalen Interferometersysteme für die gewünschte Superauflösung (Superresolution) weniger geeignet. In der Praxis erreichen sie (nur) eine Genauigkeit bis zu $\lambda/100$, und zwar auch nur unter besonders günstigen Umständen, während für verfeinerte Experimente der Superauflösung eine Genauigkeit von $\lambda/1000$ gewünscht wird bzw. erforderlich ist. Dennoch ist der genannte Four-Bucket-Algorithmus der beste Kandidat für eine Verbesserung der Genauigkeit im Hinblick auf die gewünschte Genauigkeit.

Der Erfindung liegt die Aufgabe zugrunde, ein Verfahren bzw. ein Interferenzmikroskop aufzuzeigen, bei dem die räumliche und die Phasenauflösung eines Interferenzmikroskopes im Hinblick auf eine Superauflösung optimiert ist.

In verfahrensmäßiger Hinsicht wird diese Aufgabe dadurch erfindungsgemäß gelöst, daß mittels einer dem Interferenzbilddetektor vorgeschalteten Zoom-Einrichtung mit einstellbarer Vergrößerung eine Vergrößerung (V) eingestellt wird, durch die die zu bestimmende Ortsunsicherheit ($\Delta x$) einem Teilbereich des Detektorrasters, gegebenenfalls einem Teilbereich eines Bildbereiches, zugeordnet wird, indem die Vergrößerung (V) abhängig von der Phasensteilheit ($\partial \varphi / \partial x$) der Phase ($\varphi$) im Phasenbild und von dem Signal-zu-Rauschverhältnis (SNR), eingestellt wird, wozu durch eine Rückkopplung die Bildinformation aus dem Phasenbild zur Zoom-Einstellung verwendet wird.

Durch die vorgenannten Lösungsmerkmale wird die räumliche Auflösung bei einem gattungsgemäßen Verfahren kontrolliert, wobei allerdings die Phasenauflösung und räumliche (laterale) Auflösung über die Detektion der Gradienten bzw. Kanten im Phasenbild miteinander gekoppelt sind, d.h., daß bei einer stetigen Phase keinerlei Kopplung gegeben ist.

Entsprechend ist die Phasenauflösung ($\Delta \varphi$) und die Genauigkeit der Ortsbestimmung der Ränder, Kanten oder Grate miteinander verbunden über

$$(5) \qquad \Delta\varphi = \Delta x \, \partial\varphi/\partial x.$$

Hier ist $\partial\varphi/\partial x$ eine Größe, die mit Randsteilheit bezeichnet werden könnte.

Aus den Gleichungen (3) und (4) kann ersehen werden, daß die Phasenunsicherheit direkt proportional zum Detektorrauschen ist, so daß

$$(6) \qquad \Delta\varphi = 1/SNR_D$$

ist.

Darin symbolisiert $SNR_D$ das Signal-zu-Rausch-Verhältnis des Detektors. Dabei ist zu berücksichtigen, daß das kohärente Rauschen, welches durch Streuung in dem Instrument bedingt ist, den gleichen Effekt hat. Man kann daher im folgenden diese beiden Quellen des Rauschens zusammenfassen.

Aus Gleichung (5) kann ersehen werden, daß $\Delta x$ ermittelt werden kann, wenn das Detektorrauschen und die Randsteilheit im Bildfeld bekannt sind, wobei unter Umständen eine lokale oder eine gemittelte Randsteilheit zur Bestimmung von $\Delta x$ genommen werden kann.

Die räumliche (laterale) Auflösung wird erfindungsgemäß nun dadurch optimiert, daß das Bild so vergrößert wird, daß die Ortsunsicherheit $\Delta x$ gleich wird wie die Größe pdp, wobei dp die Größe eines Detektorpixels ist und p ein Pixel-Interpolationsfaktor kleiner 1 (in der Praxis z.B. p=0,1) ist. Dazu wird das erfindungsgemäße Interferenzmikroskop mit einem gesonderten Zoom-Vergrößerungssystem versehen, welches einstellbar ist. Und zwar wird diese Einstellung kontrolliert durch Informationen über die Randsteilheit, die aus dem Phasenbild erhalten wird.

Die Zoom-Vergrößerung ist gegeben durch

$$(7) \qquad V = pdp/\Delta x = pdp \cdot \partial\varphi/\partial \, x \cdot SNR.$$

In dieser Gleichung (7) können die Werte pdp und SNR als gegeben angesehen werden. Das Produkt daraus kann empirisch ermittelt werden. In der Praxis könnte dp mit 12 µm, p mit 0,2 und SNR als 512 angesetzt werden.

Unter Berücksichtigung der Gleichung (7) wird damit erfindungsgemäß zunächst einmal aus einem Phasenbild die Randsteilheit errechnet, woraufhin ein Signal mittels eines Verstärkers erzeugt werden kann, das unter Berücksichtigung der übrigen gegebenen Werte proportional zur Vergrößerung V ist. Mit diesem Signal kann ein Zoom-Motor angesteuert werden. Es wird also erfindungsgemäß durch einen Rückkopplungszweig aus der aus dem Phasenbild erhaltenen Information eine optimale Vergrößerung ermittelt, die mit der Zoom-Einrichtung eingestellt wird, wodurch wiederum die Ergebnisse verbessert werden und die Detektcreinrichtung optimal ausgenutzt wird.

Eine Weiterbildung des erfindungsgemäßen Verfahrens sieht vor, daß zur Untersuchen bzw. Messung eines Ortes mit einer Phasensingularität im Interferenzbild eine maximale Vergrößerung $(V_s)$ gewählt wird, die proportional ist zum Detektorrauschen (SNR) und umgekehrt proportional ist zu einem Lichtstrahlbreitenparameter (b).

Phasensingularitäten können beispielsweise vorliegen bei Lasermoden höherer Ordnung. Dort treten Liniensingularitäten auf. Degenerierte Superpositionen derartiger Moden können zu Punktsingularitäten führen. Weiter können Singularitäten bei Interferenzmustern bei Interferenz von zwei Strahlen mit Gauß-Verteilung auftreten. Auch bei Fleckenmustern von Feldern, die von rauhen Oberflächen gestreut und mit Hilfe einer Apertur beobachtet werden, können Singularitäten auftreten. Ebenso können Singularitäten auftreten, wenn Felder an Diskontinuitäten von Oberflächen gestreut werden.

Ausgehend von Gleichung (7) gelangt man bei Singularitäten zu einem maximalen Vergrößerungsfaktor $V_S$, weil bei Singularitäten eine maximale Steilheit in der Phasenverteilung in der Bildebene auftritt. Geht man von Liniensingularitäten speziell aus, können diese als Konturen einer Nullamplitude definiert werden, auf deren beiden Seiten die Welle entgegengesetzte Phasen aufweist. Somit macht die Phase beim Überschreiten einer Singularität einen Sprung von π. Die Steilheit des Phasengradienten ist in einem solchen Punkt unendlich.

Will man eine solche Singularität mit Hilfe des Four-Bucket-Algorithmus untersuchen, so ist das Feld in der Nachbarschaft der Singularität bei x=0 gegeben durch

$$(8) \qquad E = x/b ,$$

wobei b ein geeigneter Strahlbreitenparameter ist. (Eine Singularität kann beispielsweise durch Interferenz zweier Gauß'scher Strahlen mit unterschiedlichen Strahlzentren erzeugt werden. In diesem Falle ist b die Strahlbreite des ursprünglichen Gauß'schen Strahls.)

Interferenz mit einem Referenzfeld $E_R = e^{i\varphi}$ ergibt

$$(9) \qquad I_1 = 1 + \frac{x^2}{b^2} + 2\frac{x}{b}\cos\varphi.$$

Mit dem Four-Bucket-Algorithmus erhält man:

$$(10) \qquad \frac{I_3 - I_4}{I_1 - I_2} = \frac{4\frac{x}{b}\sin\varphi}{4\frac{x}{b}\cos\varphi}$$

Man sieht, daß der Faktor 4 x/b sich herauskürzt, so daß man auf beiden Seiten der Singularität denselben Tangenswert tan φ erhält. Dies ist nicht verwunderlich, weil tan φ mit der Periode π periodisch ist. Am Ort x=0 ist der Bruch auf der rechten Seite der Gleichung (10) unbestimmt.

Man müßte Rauschterme zu $I_1 - I_4$ addieren, um eine physikalische Bedeutung zu erhalten. Die Singularität wird nur gesehen als Fluktuation in einem ansonsten glatten Phasenprofil.

Die Singularitätenkontur kann als Ort einer gewöhnlichen Nullamplitude erhalten werden aus:

$$(11) \qquad I_1 - I_2 = 4\frac{x}{b}\cos\varphi$$

$$I_3 - I_4 = 4\frac{x}{b}\sin\varphi$$

Von diesen Gleichungen folgt nach der Addierung von Rauschtermen, daß die Genauigkeit der Lokalisierung der Singularitätskonturen gegeben ist durch

$$(12) \qquad \frac{\delta x}{b} = \frac{1}{SNR} .$$

Hieraus folgt, daß der maximale Wert des Zoom-Vergrößerungsfaktors V gegeben ist durch:

$$(13) \qquad V_S = \frac{pdp}{b} \cdot SNR.$$

Dies korrespondiert mit einem Wert von $\partial\varphi/\partial x$ gleich 1/b.

Es sind bereits experimentelle und theoretische Arbeiten auf die Detektierung und Lokalisierung von Singularitäten in den Bildern von Phasenobjekten von V.P. Tychinsky gerichtet worden, z.B. veröffentlicht in Opt. comm. 80, Seiten 1 bis 7 (1991) und 74, Seiten 41 bis 45 (1989).

Die Vergrößerung des Mikroskopes von Tychinsky ist so gewählt worden, daß $V_S \cdot b$ gleich ist zur Größe des Detektors. In diesem Falle ist der Wert $V_S \cdot b$ durch pdp von der Größenordnung der Anzahl der Pixel in einer Zeile. Bei Tychinsky ist die Auflösung durch die Zahl der Pixel beschränkt. Dies ist jedoch eine unnötige Beschränkung. $V_S \cdot b$ kann auch größer als der Detektor gewählt werden. Laut Tychinsky ist die Auflösung proportional zu $1/\sqrt{SNR}$. In der vorliegenden Anmeldung wurde in (12) gezeigt, daß kohärente Detektion zu einer Proportionalität der Auflösung zu $1/SNR$ führt.

Eine nächste Weiterbildung des erfindungsgemäßen Verfahrens zeichnet sich dadurch aus, daß die für eine Messung geforderte Position eines eventuell vorhandenen Referenzobjektes ihrerseits mit Hilfe einer Interferenzmessung eingestellt wird.

Weiter vorne ist bereits dargelegt worden, daß der sogenannte Four-Bucket-Algorithmus relativ empfindlich ist für Fehler in der Einstellung des Referenzobjektes, insbesondere des Referenzspiegels, vor allem auch bei der schrittweisen Verstellung des Referenzspiegels, wie sie zwischen den Gleichungen (2) und (3) geschildert worden ist.

Um diese Positionsempfindlichkeit des Verfahrens nicht auf Kosten der Genauigkeit gehen zu lassen, wird erfindungsgemäß vorgeschlagen, die jeweilige Position eines Referenzobjektes seinerseits mit Hilfe einer Interferenzmessung einzustellen bzw. zu überprüfen. Damit in ein kompliziertes Interferenzsystem nicht noch ein zweites unabhängiges Interferenzsystem integriert werden muß, wird nach einer nächsten Weiterbildung vorgeschlagen, daß zur Einstellung der für eine Messung geforderten Position des Referenzobjektes durch eine Rückkopplung zwischen einem Detektor, der mit dem Interferenzbilddetektor identisch sein kann, und dem Referenzobjekt bzw. einer Bewegungseinrichtung für das Referenzobjekt die Information wenigstens eines vordetektierten Bildes genutzt wird, also das Interferenzsystem selbst zur entsprechenden Kalibrierung des Referenzobjektes genutzt wird. Dabei kann der Interferenzbilddetektor selbst verwendet werden, es kann ein bestimmter Bereich des Detektors verwendet werden oder es kann ein gesonderter, einfacherer Detektor verwendet werden, da die Überprüfungsmessungen möglichst schnell durchgeführt werden sollen.

Die axiale Positionskontrolle des Referenzobjektes erfolgt am einfachsten dadurch, daß die Position des Referenzobjektes durch Beaufschlagung mit einer harmonischen Schwingung moduliert bzw. verändert wird. Dabei wird eine Modulationsschwingung einer bestimmten Frequenz $\omega$, beispielsweise von 1000 Hertz, verwendet. Bei einer besonders eleganten und bevorzugten Durchführung des Verfahrens wird das Objekt zur Positionierung des Referenzobjektes bezüglich der dazu durchzuführenden Interferenzmessung seinerseits als Referenzobjekt verwendet.

Im einzelnen kann zu den Verfahrensweisen und Vorteilen der axialen Positionskontrolle des Referenzobjektes folgendes dargelegt werden:

Es wird die Kontrolle der Genauigkeit der Phasenmessung durch feine und strenge Kontrolle der $\pi/2$-Phasenschritte, die für den Four-Bucket-Algorithmus durchgeführt werden, vorgeschlagen. Eine Möglichkeit, dies zu tun, bestünde darin, diese Phasenschritte mittels eines separaten Interferometers zu messen, welches in den Referenzstrahl des Mikroskopes eingeführt ist. Dies wäre offensichtlich durchführbar, würde jedoch zusätzliche Komplexität des einzusetzenden Systems erfordern. Außerdem könnten dann eventuelle relative Änderungen der Position zwischen dem Objekt und dem Referenzobjekt, beispielsweise verursacht durch Vibrationen, nicht erfaßt und kompensiert werden.

Der Vorzug des Vorschlags geht also dahin, das Objekt selbst zur Positionsmessung des Referenzspiegels seinerseits als Referenzspiegel zu benutzen. Dadurch wird besonders genau auch die Position des Referenzspiegels zum Objekt bestimmt. Außerdem erlaubt diese Methode die beste Ausnutzung der vorhandenen Funktionen des Systems. Für diese Kontrollmessung könnte ein separater Detektor verwendet werden. Es ist aber auch möglich, ein Interferenzsignal durch Mittlung über einen wesentlichen Teil des Interferenzbilddetektors zu bestimmen. Dieses Signal kann folgendermaßen beschrieben werden:

$$(14) \qquad \bar{I} = \bar{a}^2 \, (1 + \bar{\mu} \, \cos \bar{\varphi})$$

In dieser Gleichung ist die gemittelte Phase gegeben durch:

$$(15) \qquad \tan \bar{\varphi} = \frac{< \sin \varphi >}{< \cos \varphi >},$$

wobei die Klammern eine Integration über den benutzten Teil des Interferenzbilddetektors bedeuten. Die Modulationstiefe $\mu$ ist annähernd gegeben durch:

$$(16) \qquad \bar{\mu} = 1 - D(\varphi).$$

Hierin ist $D(\varphi)$ die Varianz der Phase des Objektes. Wenn der Referenzspiegel verschoben wird über eine Distanz $(\varphi_o \cdot \frac{\lambda}{2\pi})$, dann wird das integrierte Signal:

$$(17) \qquad \bar{I} = \bar{a}^2 \, (1 + \bar{\mu} \, \cos (\bar{\varphi} - \varphi_o)).$$

Es soll diejenige Position des Referenzspiegels ermittelt werden, bei der der Wert $(\bar{\varphi} - \varphi_o)$ gleich ist zu $-\pi/2$, $0$, $\pi/2$, $\pi$.

Um dies zu ermitteln wird die Position des Referenzspiegels mit einer harmonischen Frequenz $\omega$ moduliert, und zwar mit einer kleinen Amplitude $\Delta\varphi$, typischerweise in der Größenordnung von $\lambda /100$, so daß ein integriertes Signal

$$(18) \qquad \bar{I}(t) = \bar{a}^2 \ (1 + \bar{\mu} \cos (\bar{\varphi} - \varphi_o + \Delta\varphi \cos \omega t))$$

erhalten wird. Wenn $\bar{\varphi} - \varphi_o = 0$ ist, dann hat die Intensität $\bar{I}(t)$ Frequenzkomponenten bei $\omega$ und $2\omega$ mit der normierten Amplitude 0 und -1. Bei $\bar{\varphi} - \varphi_o = \pi$ betragen diese normierten Amplituden 0 und 1, bei $\bar{\varphi} - \varphi_o = \pi/2$ betragen die Amplituden 1 und 0 und bei $\bar{\varphi} - \varphi_o = -\pi/2$ betragen die Amplituden -1 und 0. Eine Rückkopplungsschleife kann somit ausgestaltet werden, um den Referenzspiegel auf einen der so gekennzeichneten Positionen sehr genau einzustellen. Die Modulationstiefe $\bar{\mu}$ bestimmt die Steifheit der Kontrollschleife. Diese ist, wie man von Gleichung (16) sieht, groß, wenn die Varianz $D(\varphi)$ klein ist. Wir haben dann ein relativ glattes Objekt. Bei einem rauhen Objekt erhält man eine kleine Modulationstiefe. Dies ist auch vernünftig, weil eine präzise Phasenmessung besonders bei Objekten mit kleinen Phasenänderungen von Interesse ist.

Aus Simulationen aus dem eingangs zitierten Aufsatz von Creath ist entnehmbar, daß eine Genauigkeit von 1% des Phasenschrittes ausreichend ist, um den Four-Bucket-Algorithmus mit einer Genauigkeit von $\lambda/1000$ durchzuführen. Bei einer Modulationsamplitude von 10 mrad erfordert dies ein Rauschen (SNR) von 30 dB (10 Bit-Unterdrückung) des integrierten Signals. Dies erscheint realistisch, wenn über einen wesentlichen Teil der CCD-Zeile integriert wird oder wenn eine separate Diode benutzt wird, um das integrierte Signal zu erzeugen. Letzteres würde es erlauben, sehr viel schnellere Phasenschritte durchzuführen als ersteres. Beispielsweise könnte, wenn ein piezo-keramischer Aktivierer benutzt wird, eine Frequenzmodulation von 1000 Hertz bei kleinen Amplituden durchgeführt werden.

Eine bevorzugte Art der Beleuchtung beim Mikrokospieren ist dem Anspruch 7 entnehmbar.

Das erfindungsgemäße Interferenzmikroskop zeichnet sich aus durch eine dem Interferenzbilddetektor vorgeschaltete Zoom-Einrichtung mit einstellbarer Vergrößerung V und durch einen Rückkopplungszweig zwischen dem Interferenzbilddetektor und einer Einstelleinrichtung zur Einstellung der Vergrößerung V der Zoom-Einrichtung abhängig von den jeweils zu messenden Meßgegebenheiten des Objektes.

Gerade auch die Vergrößerung mit Hilfe einer Zoom-Einrichtung wird also mit Vorteil mittels eines Rückkopplungszweiges eingestellt, indem auch zur Einstellung einer optimalen Verqrößerung die notwendige Information aus dem Phasenbild erhalten wird, und zwar derart, daß beispielsweise sogar innerhalb eines Pixels einer CCD-Zeile interpoliert und der Detektor so besonders gut ausgenutzt werden kann. Das Interferenzmikroskop umfaßt dafür vorzugsweise im Rückkopplungszweig eine Bildverarbeitungseinrichtung zur Bearbeitung des Interferenzbildes des Interferenzbilddetektors und eine Kontrollelektronik zur entsprechenden Ansteuerung der Einstelleinrichtung.

Nach einer Weiterbildung zeichnet sich das Interferenzmikroskop dadurch aus, daß die Kontrollelektronik einen Eingang für ein in der Bildverarbeitungseinrichtung er rechnetes Signal, welches abhängig ist von der Steilheit der gemessenen Phase des Interferenzbildes in einem interessierenden Ortsbereich $\Delta x$, aufweist und einen Verstärker umfaßt, der ein dazu proportionales Steuersignal zur Einstellung der Vergrößerung V abgibt. Maximal wird die Vergrößerung V bei der Beobachtung von Singularitäten, weil die dortige Steilheit unendlich wird.

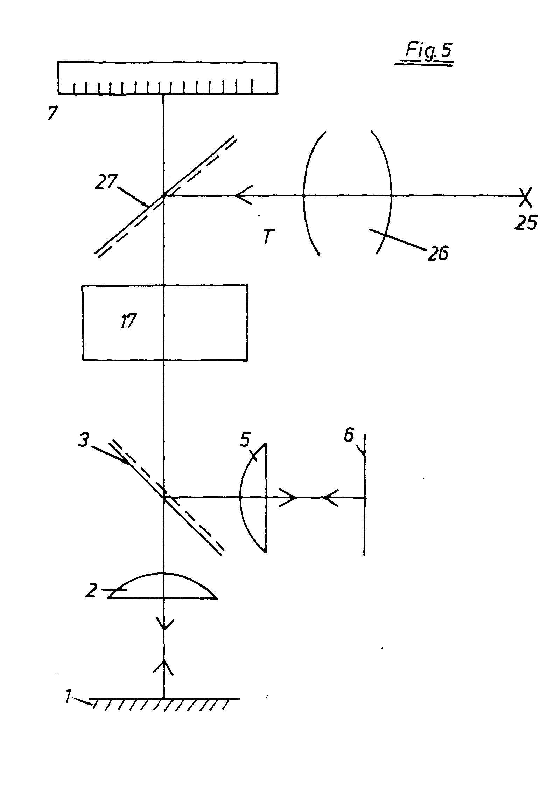

Eine Weiterbildung des Interferenzmikroskops, betreffend eine bevorzugte Beleuchtung, ergibt sich aus Anspruch 11 und wird am Ende der Fiqurenbeschreibunq im Zusammenhang mit der Fig. 5 näher erläutert.

Ausführungsbeispiele, aus denen sich weitere erfinderische Merkmale ergeben, sind in der Zeichnung dargestellt. Es zeigen:

Fig. 1 eine schematische Draufsicht auf ein erfindungsgemäßes Interferenzmikroskop des Linnik-Types,

Fig. 2 eine Rückkopplungsschleife im Blockschaltbild zur Positionskontrolle des Referenzspiegels,

Fig. 3 ein Interferenzmikroskop des Types gemäß Fig. 1 mit einer Rückkopplungsschleife zur Einstellung und Kontrolle der Vergrößerung,

Fig. 4 ein Blockschaltbild zum Rückkopplungszweig gemäß Fig. 3 und

Fig. 5 eine Modifikation des Interferenzmikroskops gemäß Fig. 3 mit geänderter Beleuchtungsanordnung.

Fig. 1 zeigt ein erstes Ausführungsbeispiel eines erfindungsgemäßen Interferenzmikroskopes vom Linnik-Typ.

Das System umfaßt ein Objekt 1, welches im gezeigten Falle reflektiert, eine Objektivlinse 2, einen Strahlteiler 3, der als halbdurchlässiger Spiegel ausgebildet ist, einen Beleuchtungsstrahl 4, ausgehend von einer Lichtquelle, ein Referenzobjektiv 5, welches im Aufbau der Objektivlinse 2 entspricht, und einen Referenzspiegel 6, der in Richtung des gezeigten Doppelpfeiles axial zum Lichtstrahl bewegbar ist. Darüber hinaus kann der Referenzspiegel 6 auch noch um zwei Achsen kippbar bzw. drehbar sein. Außerdem umfaßt das System als Interferenzbilddetektor eine CCD-Zeile 7, deren Bilder durch einen Bildprozessor 19 in Phasenbilder umgesetzt werden.

Der Beleuchtungstrahl 4 trifft auf den Strahlteiler 3 und wird von diesem in einen Objektstrahl und einen Referenzstrahl geteilt. Der Objektstrahl trifft durch die Objektivlinse 2 auf das zu untersuchende Objekt 1 und wird von diesem reflektiert, während der Referenzstrahl durch das Referenzobjektiv 5 auf den Referenzspiegel 6 trifft und von diesem reflektiert wird. Im Bereich des Strahlteilers 3 werden beide Teilstrahlen wieder zusammengeführt und auf die CCD-Zeile 7 geworfen, in der ein Interferenzbild der beiden Teilstrahlen gemessen wird. Gemessen wird zunächst einmal das Intensitätsmuster der Intensität I. Es soll jedoch insbesondere eine Phaseninformation erhalten werden über die Phase, aus der Informationen gewonnen werden können, die letztendlich zu einer Superauflösung des Interferenzmikroskopes jenseits der Beugungsgrenze führen, nämlich den Gleichungen (1) bis (4) folgend. Dazu muß der Referenzspiegel 6 schrittweise in seinen Positionen verändert werden, und zwar um Bruchteilen der Wellenlänge entsprechende Schritte. Von der Genauigkeit der Einstellung dieser Spiegelpositionen hängt letztendlich auch die Genauigkeit der eigentlichen Interferenzmessung ab. Die Einstellung der genauen Spiegelposition des Referenzspiegels 6 wird daher bei dem in Fig. 1 gezeigten Interferenzmikroskop mittels eines Rückkopplungszweiges 8 kontrolliert bzw. eingestellt, und zwar von einer Steuereinrichtung 9. Für den Rückkopplungszweig kann die Information von der als Interferenzbilddetektor verwendeten CCD-Zeile 7 abgenommen werden, es kann dafür aber auch ein einfacher, zusätzlicher Detektor 10 vorgesehen sein, wie dies in Fig. 1 beispielhaft gezeigt ist. Für diesen Detektor 10 wird der Interferenzstrahl aus dem Strahlengang abgezweigt.

Im wesentlichen wird zur Kontrolle der Positionseinstellung des Referenzspiegels 6 dieser mit einer harmonischen Schwingung in Vibrationen, d.h. in Ortsschwankungen, versetzt. Den Gleichungen (14) bis (18) folgend, können daraus die gewünschten Informationen der Positionseinstellung des Referenzspiegels 6 entnommen werden.

Die Fig. 2 zeigt detaillierter die Steuereinrichtung 9 gemäß Fig. 1 in einem Blockschaltbild.

Die Steuerungseinrichtung 9 hat einen Eingang 11, durch den das Intensitätssignal vom Detektor 10 oder von einem integrierten Bereich des Detektors 7 eintritt. Weiter umfaßt die Steuereinrichtung 9 einen Oszillator 12, der mit einer Modulationsfrequenz $\omega$ den Referenzspiegel 6 antreibt und Vergleichsfrequenzen $\omega$, $2\omega$ erzeugt und diese in Heterodynverstärkern 13 bzw. 14 mit dem Eingangssignal mischt. Die (bandgefilterten) Ausgangssignale A ($\omega$) und A ($2\omega$) von 13 und 14 werden in einer Vergleichsschaltung 15 mit durch den Bildprozessor 19 erzeugten Referenzsignalen $A_1$ und $A_2$ verglichen. Aufgrund des Vergleichsergebnisses wird dann entsprechend durch das Ausgangssignal des Vergleichers 15 der Referenzspiegel 6 auf die gewünschte Position genau eingestellt.

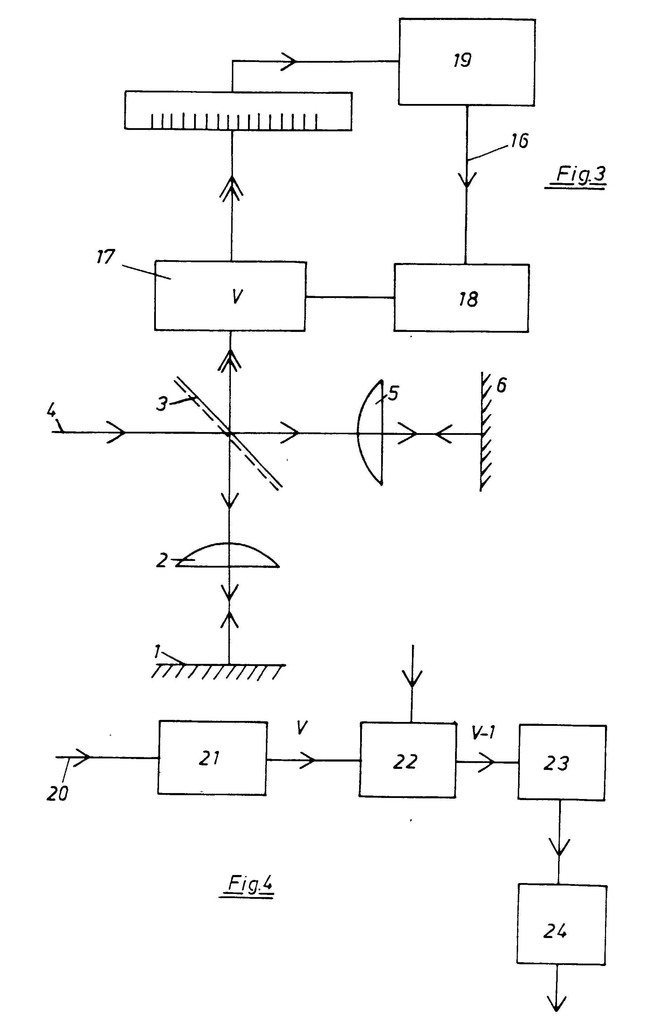

Fig. 3 zeigt ein Ausführungsbeispiel eines Interferenzmikroskopes des Typs gemäß Fig. 1. Vorzugsweise zusätzlich zum Rückkopplungszweig 8, der der Deutlichkeit halber in der Fig. 3 fortgelassen ist, weist das Interferenzmikroskop in Fig. 3 einen Rückkopplungszweig 16 auf, der als Vergrößerungseinrichtung zur Einstellung einer Vergrößerung V eine Zoom-Einrichtung 17 umfaßt, sowie eine Kontrollelektronik 18 und einen Bildprozessor 19. Gleiche Bauelemente sind mit den gleichen Bezugszahlen bezeichnet wie in Fig. 1.

Durch den Rückkopplungszweig 16 wird abhängig von dem in der CCD-Zeile 7 gewonnenen Interferenzbild über die Zoom-Einrichtung 17 eine solche Vergrößerung V optimal bzw. maximal eingestellt, die bei einer gewissen Interpolation innerhalb der Pixel der CCD-Zeile eine bessere Ausnutzung der CCD-Zeile und damit eine optimale Auflösung erlaubt.

Die Kontrollelektronik 18 ist in der Fig. 4 in einem Blockschaltbild etwas detaillierter dargestellt.

Von dem Bildprozessor 19 gelangt ein Eingangssignal 20 zunächst einmal in einen Verstärker 21, der ein Signal proportional zur Vergrößerung V abgibt, und zwar an einen Vergleicher 22, der von der Vergrößerung 1 bzw. einen Vergrößerungschritt abzieht. Das Ausgangssignal dieses Vergleichers gelangt zu einem Energieverstärker 23, der einen Motor 24 ansteuert, der für die entsprechende Zoom-Einstellung der Zoom-Einrichtung 17 sorgt.

Fig. 5 zeigt ein weiteres Ausführungsbeispiel eines erfindungsgemäßen Interferenzmikroskops. Gleiche Bauelemente sind wieder mit den gleichen Bezugszahlen bezeichnet wie in Fig. 1.

Außerdem verfügt dieses Interferenzmikroskop über eine Zoom-Einrichtung 17.

Die Besonderheit bei diesem Interferenzmikroskop besteht darin, daß eine Lichtquelle 25 so angeordnet ist, daß der Beleuchtungsstrahl so über eine Optik 26 und einen Umlenkspiegel 27 in den Strahlengang gegeben wird, daß bereits der Beleuchtungsstrahl, wie auch der zurückkehrende Interferenzstrahl durch die Zoom-Einrichtung 17 gelangen, anders als bei der Darstellung gemäß Fig. 3.

Grundsätzlich ist es möglich, eine Breitbandlichtquelle für die Interferenzmikroskopie so zu verwenden, wie eine monochromatische Lichtquelle. Man muß vorsichtig sein, die Differenz der optischen Weglänge zwischen der Objektwelle und der Referenzwelle kleiner als die Kohärenzlänge der Lichtquelle zu halten. Der beleuchtete Teil des Objektes muß dabei an die Größe des Detektors und die Vergrößerung angepaßt sein. Dies fordert eine Kontrolle der Vergrößerung im Beleuchtungszweig. Diese Forderung kann bei der Vorrichtung gemäß Fig. 5, bei der der Beleuchtungsstrahl durch die Zoom-Einrichtung 17 gesandt wird, in einfacher Weise ohne weitere Anforderungen erfüllt werden.

Ein Vorteil in der Verwendung einer Lichtquelle mit begrenzter Kohärenzlänge liegt darin, daß in dem Instrument gestreutes Licht als inkohärent mit der Objektwelle und Referenzwelle angesehen werden kann. Dies ergibt eine gleichbleibende Untergrundintensität in dem Detektor, die durch die Verwendung des Four-Bukket-Algorithmus unterdrückt wird. In den zitierten Arbeiten von Tychinsky wird das Objekt mit einem fokussierten Laserstrahl beleuchtet. Das Bild dieses Strahls überdeckt den Detektor. In diesem Falle ist eine fokussierte Beleuchtung notwendig, aber in anderen Situationen muß das Beleuchtungsmuster davon unterschiedlich an das Sichtfeld angepaßt werden. Die Vorrichtung gemäß Fig. 5 realisiert eine solche Anpassung automatisch.

**Patentansprüche**

1. Verfahren zum Mikroskopieren eines Objektes (1) mit einem extrem hochauflösenden Interferenzmikroskop, bei welchem das Objekt (1) mittels einer Lichtquelle (25) durch ein Objektiv (2) beleuchtet wird, wobei der Lichtstrahl (4) der Lichtguelle (25) durch einen Strahlteiler (3) in wenigstens zwei kohärente Teilstrahlen geteilt wird, von denen wenigstens einer zur Beleuchtung des Objektes (1) dient, und die Teilstrahlen nach der Beleuchtung des Objektes (1) und gegebenenfalls eines Referenzobjektes (6) interferierend wieder zusammengeführt und einem in Bildbereiche gerasterten Interferenzbilddetektor (7) zur Erzeugung wenigstens eines Interferenzbildes zugeführt werden und aus der Bildinformation eines oder mehrerer Interferenzbilder mittels eines geeigneten Algorithmus ein Phasenbild errechnet wird, zur Erzielung einer Auflösung jenseits der Beugungsgrenze, das heißt einer zu bestimmenden Ortsunsicherheit ($\Delta$ x) auf dem Objekt kleiner als eine halbe Wellenlänge des benutzten Lichtes,
**dadurch gekennzeichnet,**
daß mittels einer dem Interferenzbilddetektor (7) vorgeschalteten Zoom-Einrichtung (17) mit einstellbarer Vergrößerung eine Vergrößerung (V) eingestellt wird, durch die die zu bestimmende Ortsunsicherheit ($\Delta$ x) einem Teilbereich des Detektorrasters, gegebenenfalls einem Teilbereich eines Bildbereiches, zugeordnet wird, indem die Vergrößerung (V) abhängig von der Phasensteilheit ($\partial$ $\varphi$ /$\partial$ x) der Phase ( $\varphi$ ) im Phasenbild und von dem Signal-zu-Rauschverhältnis (SNR) eingestellt wird, wozu durch eine Rückkopplung die Bildinformation aus dem Phasenbild zur Zoom-Einstellung verwendet wird.

2. Verfahren nach Anspruch 1, dadurch gekennzeichnet, daß zur Untersuchung bzw. Messung eines Ortes mit einer Phasensingularität im Interferenzbild eine maximale Vergrößerung ($V_s$) gewählt wird, die proportional ist zum Detektorrauschen (SNR) und umgekehrt proportional ist zu einem Lichtstrahlbreitenoarameter (b).

3. Verfahren zum Mikroskopieren eines Objektes mit einem extrem hochauflösenden Interferenzmikroskop nach einem der vorhergehenden Ansprüche, dadurch gekennzeichnet, daß die für eine Messung geforderte Position eines Referenzobjektes (6) ihrerseits mit Hilfe einer Interferenzmessung eingestellt wird.

4. Verfahren zum Mikroskopieren eines Objektes mit einem extrem hochauflösenden Interferenzmikroskop nach Anspruch 3, dadurch gekennzeichnet, daß zur Einstellung der für eine Messung geforderten Position des Referenzobjektes (6) durch eine Rückkopplung zwischen einem Detektor (7, 10) der mit dem Interferenzbilddetektor (7) identisch sein kann, und dem Referenzobjekt (6) bzw. einer Bewegungseinrichtung für das Referenzobjekt (6) die Information wenigstens eines zuvor detektierten Bildes genutzt wird.

5. Verfahren nach Anspruch 4, dadurch gekennzeichnet, daß die Position des Referenzobjektes (6) durch Beaufschlagung mit einer harmonischen Schwingung der Frequenz $\omega$ im Bereich einer zweiten Stellung moduliert bzw. verändert wird, um aus der Änderung der dadurch bedingten Phasendifferenz zwischen der Phase $\varphi_o$ bei einer ersten Stellung und der sich durch die Modulation im Bereich der zweiten Stellung ändernden Phase $\varphi_o + \Delta \varphi \cos \omega t$ genauere Aussagen für die Positionierung des Referenzobjektes (6) zu erlangen.

6. Verfahren nach Anspruch 5, dadurch gekennzeichnet, daß zur Positionsbestimmung bzw. einstellung des Referenzobjektes (6) die Frequenzkomponenten des integrierten Intensitätssignales $\bar{I}(t)$ bei der Modulationsfrequenz ($\omega$) und der doppelten Frequenz ($2\omega$) herangezogen werden.

7. Verfahren nach einem oder mehreren der vorhergehenden Ansprüche, dadurch gekennzeichnet, daß die Beleuchtung, vorzugsweise mit Weißlicht, mit dem von der Lichtquelle (25) kommenden Lichtstrahl (4) vor dessen Strahlteilung in den Objektstrahl und den Referenzstrahl durch die Zoom-Optik (17) erfolgt, mit der das Interferenzbild der interferierenden Strahlen, nach deren Zusammenführung, auf den Interferenzbilddetektor (7) abgebildet wird.

8. Interferenzmikroskop mit einer Lichtquelle (25) zur Beleuchtung eines Objektes (1), mit einem Strahlteiler (3) zur Teilunq des von der Lichtquelle (25) ausgesandten Lichtstrahles (4) in wenigstens zwei kohärente Teilstrahlen, von denen wenigstens einer zur Beleuchtung des Objektes (1) vorgesehen ist, und mit einem in Bildbereiche gerasterten Interferenzbilddetektor (7) zur Detektion des Interferenzbildes der interferierenden Teilstrahlen, vorzugweise zur Durchführung des Verfahrens nach einem oder mehreren der Ansprüche 1 bis 7,
**gekennzeichnet durch**
eine dem Interferenzbilddetektor (7) vorgeschaltete Zoom-Einrichtung (17) mit einstellbarer Vergrößerung (V) und durch einen Rückkopplungszweig (16) zwischen dem Interferenzbilddetektor (7) und einer Einstelleinrichtung (24) zur Einstellung der Vergrößerung (V) der Zoom-Einrichtung (17) abhängig von den jeweils zu messenden Meßgegebenheiten des Objektes (1).

9. Interferenzmikroskop nach Anspruch 8, dadurch gekennzeichnet, daß der Rückkopplungszweig (16) eine Bildverarbeitungseinrichtung (19) zur Verarbeitung des Interferenzbildes des Interferenzbilddetektors (7) und eine Kontrollelektronik (18) zur entsprechenden Ansteuerung der Einstelleinrichtung (24) aufweist.

10. Interferenzmikroskop nach Anspruch 9, dadurch gekennzeichnet, daß die Kontrollelektronik (18) einen Eingang (20) für ein in der Bildverarbeitungseinrichtung (19) errechnetes Signal, welches abhängig ist von der Steilheit der gemessenen Phase des Interferenzbildes in einem interessierenden Ortsbereich ( $\Delta$ x) des Objektes (1), aufweist und einen Verstärker (21, 23) umfaßt, der ein dazu proportionales Steuersignal zur Einstellung der Vergrößerung (V) abgibt.

11. Interferenzmikroskop nach einem oder mehreren der Ansprüche 8 bis 10,
**gekennzeichnet durch**
eine Lichtstrahlzuführungseinrichtung zur Leitung des von der Lichtquelle (25) kommenden Beleuchtungsstrahles (4) vorzugsweise aus Weißlicht, vor dessen Strahlteilung in kohärente Teilstrahlen durch die Zoom-Optik (17) durch die das Interferenzbild auf dem Interferenzbilddetektor (7) abgebildet wird.

**Claims**

1. A method for the microscopy of an object (1) with an extremely high-resolution interference microscope, in which the object (1) is illuminated by means of a light source (25) through an objective (2), the light beam (4) of the light source (25) being split by means of a beam splitter (3) into at least two coherent partial beams, at least one of which serves to illuminate the object (1), and after illuminating the object (1) and optionally a reference object (6) the partial beams are recombined, interfering, and are supplied to an interference image detector (7) subdivided into image regions to generate at least one interference image and from the image information of one or more interference images a phase image is calculated by means of a suitable algorithm to obtain a resolution beyond the diffraction limit, that is to say a local uncertainty ( $\Delta$ x) to be determined on the object smaller than half the wavelength of the light used,
characterised in that by means of a zoom device (17) with adjustable magnification disposed ahead of the interference image detector (7) a magnification (V) is adjusted by which the local uncertainty ( $\Delta$ x) to be determined is assigned to a partial region of the detector grid, optionally a partial region of an image region, by the magnification (V) being adjusted in dependence on the phase steepness ($\partial \varphi / \partial$ x) of the phase ( $\varphi$ ) in the phase image and on the signal-to-noise ratio (SNR), for which purpose the image information from the phase image is used for zoom adjustment by means of feedback.

2. A method according to claim 1, characterised in that to investigate or measure a location with a phase singularity in the interference image a maximum magnification ($V_s$) is selected which is proportional to the detector noise (SNR) and inversely proportional to a light beam width parameter (b).

3. A method for the microscopy of an object with an extremely high-resolution interference microscope according to one of the preceding claims, characterised in that the position of a reference object (6) required for a measurement is for its part adjusted with the aid of an interference measurement.

4. A method for the microscopy of an object with an extremely high-resolution interference microscope according to claim 3, characterised in that to adjust the position of the reference object (6) required for a measurement by means of feedback between a detector (7, 10), which may be identical to the interference image detector (7), and the reference object (6) or a moving device for the reference object (6), the information at least of one previously detected image is used.

5. A method according to claim 4, characterised in that the position of the reference object (6) is modulated or changed by applying thereto a harmonic oscillation of the frequency ω in the region of a second position, in order to gain more precise information for the positioning of the reference object (6) from the change of the phase difference thereby caused between the phase $\varphi_o$ in a first position and the phase $\varphi_o + \Delta \varphi \cos \omega t$ changing as a result of the modulation in the region of the second position.

6. A method according to claim 5, characterised in that in order to determine or adjust the position of the reference object (6) the frequency components of the integrated intensity signals $\bar{I}(t)$ at the modulation frequency (ω) and the double frequency (2ω) are used.

7. A method according to one or more of the preceding claims, characterised in that the illumination, preferably with white light, with the light beam (4) coming from the light source (25) takes place before the beam splitting thereof into the object beam and the reference beam by means of the zoom optical system (17) with which the interference image of the interfering beams, after the combining thereof, is displayed on the interference image detector (7).

8. An interference microscope with a light source (25) for illuminating an object (1), with a beam splitter (3) for splitting the light beam (4) emitted by the light source (25) into at least two coherent partial beams, at least one of which is provided for illuminating the object (1), and with an interference image detector (7) subdivided into image regions for detecting the interference image of the interfering partial beams, preferably for implementing the method according to one or more of claims 1 to 7,
characterised by a zoom device (17) disposed ahead of the interference image detector (7) with adjustable magnification (V), and by a feedback path (16) between the interference image detector (7) and an adjustment device (24) for adjusting the magnification (V) of the zoom device (17) in dependence on the particular measurement data of the object (1) to be measured.

9. An interference microscope according to claim 8, characterised in that the feedback path (16) has an image processing device (19) for processing the interference image of the interference image detector (7) and an electronic monitoring system (18) for appropriately activating the adjustment device (24).

10. An interference microscope according to claim 9, characterised in that the electronic monitoring system (18) has an input (20) for a signal calculated in the image processing device (19) which is dependent on the steepness of the measured phase of the interference image in a particular local region ($\Delta$ x ) of the object (1) and comprises an amplifier (21, 23) which issues a control signal proportional thereto for adjusting the magnification (V).

11. An interference microscope according to one or more of claims 8 to 10, characterised by a light beam supply device to pass the illuminating beam (4), preferably composed of white light, coming from the light source (25), before the beam splitting thereof into coherent partial beams, through the zoom optical system (17) by means of which the interference image is displayed on the interference image detector (7).

**Revendications**

1. Procédé pour examiner un objet (1) à l'aide d'un microscope à interférence à très haute résolution, sur lequel l'objet (1) est éclairé au moyen d'une source de lumière (25) à travers un objectif (2), le rayon lumineux (4) de la source de lumière (25) étant partagé, par un séparateur de faisceau (3), en au moins deux rayons partiels cohérents dont au moins un sert à éclairer l'objet (1) et lesrayons partiels étant à nouveau rassemblés en contraste interférentiel après avoir éclairé l'objet (1) et, le cas échéant, un objet de référence (6), et conduits vers un détecteur d'images interférentielles (7) quadrillé en zones de visualisation pour produire au moins une image interférentielle et, à partir de l'information donnée par une ou plusieurs images interférentielles, calculer une image de phase au moyen d'un algorithme approprié afin d'obtenir une résolution au-delà de la limite de diffraction, c'est-à-dire d'une insécurité locale ($\Delta$ x), à déterminer sur l'objet, inférieure à une demi-longueur d'onde de la lumière utilisée, **caractérisé en ce qu'**au moyen d'un dispositif zoom (17) à ouverture réglable, placé avant le détecteur d'images interférentielles (7), on règle une ouverture (V) permettant d'allouer l'incertitude locale ($\Delta$ x) à déterminer à une zone partielle du quadrillage du détecteur, le cas échéant à une zone partielle d'une zone de visualisation en réglant l'ouverture (V) en fonction de la pente ($\partial \delta / \partial$ x) de la phase (δ) dans l'image de phase et du rapport signal/bruit (SNR), ce pourquoi on utilise l'information de l'image de phase, par l'intermédiaire d'une rétroaction, pour régler le zoom.

2. Procédé selon la revendication 1, caractérisé en ce que, pour analyser respectivement mesurer un site à l'aide d'une singularité de phase dans l'image interférentielle, on choisit une ouverture maximale ($V_S$) proportionnelle au bruit du détecteur (SNR) et inversement proportionnelle à un paramètre de largeur du rayon lumineux (b).

3. Procédé d'examen d'un objet à l'aide d'un microscope à très haute résolution, caractérisé en ce que la position d'un objet de référence (6), exigée pour procéder à la mesure, est réglée de son côté à l'aide d'une mesure interférentielle.

4. Procédé d'examen d'un objet à l'aide d'un microscope à interférence à très haute résolution selon la revendication 3, caractérisé en ce que, pour régler la position de l'objet de référence (6) exigée pour procéder à une mesure par rétroaction entre un détecteur (7, 10), pouvant être identique au détecteur d'images interférentielles (7), et l'objet de référence (6) respectivement un sens de mouvement de l'objet de référence (6), on utilise l'information d'au moins une image précédemment détectée.

5. Procédé selon la revendication 4, caractérisé en ce que la position de l'objet de référence (6) est modulée respectivement modifiée par application d'une oscillation harmonique de la fréquence w dans la zone d'une deuxième position, pour obtenir des résultats plus précis pour le positionnement de l'objet de référence (6) à partir de la modification de la différence de phase qui en dépend entre la phase $\delta_o$ d'une première position et la phase $\delta_o + \Delta \delta \cos wt$, qui évolue du fait de la modulation dans la zone de la deuxième position.

6. Procédé selon la revendication 5, caractérisé en ce que, pour déterminer respectivement régler la position de l'objet de référence (6), ont fait appel aux composantes de la fréquence du signal d'intensité $\overline{I}$ (t) intégré pour la fréquence de modulation (w) et la fréquence double (2w).

7. Procédé selon l'une ou plusieurs des revendications précédentes, caractérisé en ce que l'éclairage est, de préférence, de la lumière blanche, le rayon lumineux (4) provenant de la source de lumière (25) avant son partage en rayon pour l'objet et rayon de référence par l'optique zoom (17) servant à représenter, sur le détecteur d'images interférentielles (7), l'image interférentielle des rayons interférants après leur regroupement.

8. Microscope à interférence avec une source de lumière (25) destinée à éclairer un objet (1) à l'aide d'un séparateur de faisceau (3) destiné à partager le rayon lumineux (4) émis par la source lumineuse (25) en au moins deux rayons partiels cohérents dont au moins un est prévu pour éclairer l'objet (1), et avec un détecteur d'images interférentielles (7) quadrillé en zones de visualisation destiné à détecter l'image interférentielle des rayons partiels interférants, de préférence destiné à appliquer le procédé selon une ou plusieurs des revendications 1 à 7, **caractérisé par** un dispositif zoom (17) à ouverture réglable (V) placé avant le détecteur d'images interférentielles (7), et par une branche de rétroaction (16) entre le détecteur d'images interférentielles (7) et un dispositif de réglage (24) destiné à régler l'ouverture (V) du zoom (17) en fonction des données de mesure de l'objet (1) à mesurer.

9. Microscope à interférence selon la revendication 8, caractérisé en ce que la branche de rétroaction (16) présente un dispositif de traitement de l'image (19) destiné à traiter l'image interférentielle du détecteur d'images interférentielles (7) et une électronique de contrôle (18) destinée à commander en conséquence le dispositif de réglage (24).

10. Microscope à interférence selon la revendication 9, caractérisé en ce que l'électronique de contrôle (18) présente une entrée (20) pour un signal calculé dans le dispositif de traitement de l'image (19), signal qui dépend de la pente de la phase mesurée de l'image interférentielle dans une zone intéressante ($\Delta$ x) de l'objet (1) et comprend un amplificateur (21, 23) qui émet un signal de commande proportionnel destiné à régler l'ouverture (V).

11. Microscope à interférence selon l'une ou plusieurs revendications 8 à 10, **caractérisé par** un dispositif de conduite des rayons lumineux destiné à conduire le rayon d'éclairage (4), de préférence en lumière blanche, venant de la source lumineuse (26), avant son partage en rayons partiels cohérents par l'optique zoom (17) permettant de représenter l'image interférentielle sur le détecteur d'images interférentielles (7).

_Fig.1_

_Fig.2_

A (ω)

$A_1$

$A_2$

A (2ω)

19

16

_Fig.3_

17

V

18

3

5

6

4

2

1

20

21

V

22

V-1

23

24

_Fig.4_

Fig. 5